# EUROPÄISCHE PATENTSCHRIFT

(11) **EP 2 321 555 B1**
(45) Veröffentlichungstag und Bekanntmachung des Hinweises auf die Patenterteilung: **19.09.2012**
(21) Anmeldenummer: 09780216.9
(22) Anmeldetag: 07.07.2009
(51) Int. Cl.: F16H 7/12

(54) **SPANNSYSTEM FÜR EINEN ZUGMITTELTRIEB**
TENSIONING SYSTEM FOR A TRACTION MECHANISM DRIVE
SYSTÈME DE TENSION POUR MÉCANISME DE TRACTION

(30) Priorität: 07.08.2008 DE 102008036749
(43) Veröffentlichungstag der Anmeldung: 18.05.2011
(73) Patentinhaber: Schaeffler Technologies AG & Co. KG, 91074 Herzogenaurach (DE)
(72) Erfinder: SINGER, Johann, 91091 Großenseebach (DE); MENNERAT, Thomas, 91074 Herzogenaurach (DE); KRÜGER, Christian, 91058 Erlangen (DE)
(86) Internationale Anmeldenummer: PCT/EP2009/058552
(87) Internationale Veröffentlichungsnummer: WO 2010/015469

(56) Entgegenhaltungen:
- EP-A- 1 862 702
- DE-A1-102006 017 287
- US-A1- 2008 058 143

## Beschreibung

### Gebiet der Erfindung

Die Erfindung betrifft ein Spannsystem, mit dem ein Zugmittel, insbesondere ein Riemen eines Zugmitteltriebs von Brennkraftmaschinen vorgespannt wird. Der Aufbau des Spannsystems umfasst einen Spannhebel, der über ein aus der Nabe des Spannhebels einer Gleitlagerbuchse und dem Basiselement gebildeten Schwenklager drehbar angeordnet ist. An einem freien Ende ist dem Spannhebel eine mit dem Zugmittel zusammenwirkende Spannrolle zugeordnet. Zur Einleitung eines in Spannrichtung des Spannhebels wirkendes Torsionsmoment ist ein Federelement vorgesehen, dass mit einem Federende an dem Basiselement und einem weiteren Federende jeweils drehfixiert abgestützt ist. Weiterhin ist zur gezielten Dämpfung von Stellbewegungen des Spannhebels ist eine Reibvorrichtung vorgesehen.

Spannsysteme dieser zuvor beschriebenen Bauform finden Anwendung in Zugmittelgetrieben von Brennkraftmaschinen, die zum Antrieb einzelner Aggregate wie beispielsweise Wasserpumpe, Klimakompressor, Lenkhilfspumpe eingesetzt werden, wobei der Antrieb von der Kurbelwelle mittels einer Riemenscheibe erfolgt. Über das Spannsystem wird selbsttätig eine gleich bleibende Vorspannung des Zugmittels sowie eine Schwingungsdämpfung des Spannhebels gewährleistet, unabhängig vom Verschleißzustandes Zugmittels.

Aus der DE 10 2006 017 287 A1 ist ein gattungsbildendes Spannsystem bekannt. Der Aufbau umfasst ein topfartig gestaltetes Basisteil, in das einen zylindrischen Lagerzapfen als separates Bauteil eingesetzt ist, auf denen gleichzeitig der Spannhebel über eine Nabe in Verbindung mit einer Lagerbuchse drehbar angeordnet ist. Ein Außenmantel des topfartigen Basisteils erstreckt sich axial über die gesamte Länge des als Torsionsfeder ausgeführten Federelements. Zur Darstellung einer Reibvorrichtung ist ein hülsenartig gestalteter Reibring vorgesehen, der spannhebelseitig in einem von der Torsionsfeder und der Innenwandung des Basisteil-Außenmantels radial begrenzten Bauraum eingesetzt ist. Durch die Anordnung und Einbaulage der Torsionsfeder wird diese im Einbauzustand beim Spannen radial ausgedehnt. Der Aufbau dieses bekannten Spannsystems erfordert beispielsweise durch den separaten Lagerbolzen einen relativ großen Bauteileumfang. Außerdem wird der radiale Bauraum des Spannsystems insbesondere definiert durch den Durchmesser der Torsionsfeder, die Bauteilstärke des Reibrings sowie der Wandstärke von dem Außenmantel des Basisteils.

### Zusammenfassung der Erfindung

Die Nachteile des bekannten Spannsystems beachtend, ist es Aufgabe der Erfindung, ein bauraumoptimiertes, kostengünstig herstellbares und wirksame Spannsystem zu realisieren.

Zur Lösung dieser Problemstellung ist gemäß der vorliegenden Erfindung vorgesehen, dass zumindest das Basisteil, der Schwenklager und das Federelement nahezu vollständig in einer zylindrischen Aufnahme bzw. Öffnung eines dem zu Spannsystem zugeordneten separaten Maschinenteilen ist eingesetzt ist. Vorzugsweise ist als Aufnahme ein in das Maschinenteil eingebrachte zylindrische Bohrung beziehungsweise Sacklochbohrung vorgesehen. Der Aufbau des erfindungsgemäßen Spannsystems umfasst weiterhin eine Reibvorrichtung, die mit einem separaten, einem dem Spannsystem nicht zugehörigen Bauteil, Einrichtung oder Maschinenteil zusammenwirkt. Beispielsweise bietet es sich an, dass die Reibvorrichtung des Spannsystems unmittelbar an der Innenwandung des Maschinenteils abgestützt ist. Das erfindungsgemäße Konzept bei dem das Spannsystem in ein separates Maschinenteil integriert ist optimiert den Bauteilumfang der Spannsystems, verbunden mit einem geringeren Gewicht. Weiterhin stellt sich durch das unmittelbare Zusammenwirken der Reibvorrichtung mit dem separaten Maschinenteil aufgrund der großen Masse und der Austauschfläche, die beispielsweise mittels Verrippungen vergrößert werden kann, eine verbesserte Wärmeleitung ein, was sich vorteilhaft auf den Verschleiß und damit auf die Lebensdauer des Spannsystems auswirkt. Vorteilhaft ist das erfindungsgemäße Spannsystem als vorkomplettierbare Baueinheit in die dafür vorgesehene Aufnahme des Maschinenteils einsetzbar. Anschließend erfolgt die Befestigung und Lagefixierung des Spannsystems mittels einer durch das Basisteil geführten, im Maschinenteil verschraubten Befestigungsbohrung. Das kompakte, gewichts- und bauteiloptimierte und einfach zu montierende Spannsystem bietet insgesamt ein kostengünstiges Konzept.

Weitere vorteilhafte Ausgestaltungen der Erfindung sind Gegenstand der abhängigen Ansprüche 2 bis 15.

Als Maschinenteil ist bevorzugt ein als Nebenaggregateträger oder Aggregateträger bezeichnetes Bauteil einer Brennkraftmaschine vorgesehen. Der als separates Bauteil stirnseitig an der Brennkraftmaschine befestigte Nebenaggregateträger dient beispielsweise zur Aufnahme des Generators und des Klimakompressors und bildet zwischen den Aggregaten eine für das Spannsystem bestimmte Aufnahme, Öffnung oder Bohrung. Insbesondere für kleinvolumige, kompakte Brennkraftmaschinen ist der für das Spannsystem bestimmte Einbauraum relativ klein dimensioniert. Das erfindungsgemäße Spannsystem ist insbesondere aufgrund der unmittelbar an der Innenwandung der Aufnahme im Maschinenteil abgestützten Reibvorrichtung prädestiniert für eng dimensionierte Bauräume. Alternativ zu einem Nebenaggregateträger bietet es sich an, das Spannsystem gemäß der vorliegenden Erfindung, unmittelbar in einer Aufnahme eines Gehäuses der Brennkraftmaschine, beispielsweise dem Kurbelgehäuse zu integrieren. Diese Anordnung ermöglicht ein zur Aufnahme des Spannsystems bestimmtes Kurbelgehäuse der Brennkraftmaschine so zu gestalten, dass der Einbaubereich des Spannsystems mittelbar von Kühlkanälen des Kühlwasserkreislaufs der Brennkraftmaschine beaufschlagt werden, zwecks verbesserter Kühlung des Spannsystems.

Zum Spannen des Spannsystems ist bevorzugt eine als Schraubenfeder ausgebildete Torsionsfeder vorgesehen, durch deren Einbau und Anordnung sich die Torsionsfeder zum Spannen radial aufweitet. Dieses Federprinzip bewirkt eine kraftschlüssige Anlage der Reibvorrichtung an der Innenwandung des Maschinenteils, aufgrund der Einbaulage der Torsionsfeder, die einen Endbereich der Torsionsfeder außenseitig umschließt.

Die Torsionsfeder ist schwenkhebelseitig an einem Abstützelement fixierte, dass eine dem Windungsverlauf des Federendes entsprechende Aufnahme und einem Endanschlag bildet. Das vorteilhaft aus Kunststoff hergestellte Abstützelement ist gegenüber dem Schwenkhebel drehfixiert und bildet einen hülsenartigen axial vorstehenden tragen, der zumindest eine Federende der Torsionsfeder umgreift. Das Abstützelement wird von einem Reibring umschlossen, der sich außenseitig an der Innenwandung der Bohrung beziehungsweise Aufnahme des Maschinenteils abstützt. Zur Schaffung eindeutiger Reibverhältnisse ist der Reibring an dem Abstützelement fixiert, wodurch bei einer Stellbewegung des Spannhebels sich eine Relativbewegung zwischen dem Reibring und der Innenwandung in dem Maschinenteil einstellt. Alternativ dazu bietet es sich an, den Reibring in der Bohrung des Maschinenteils zu fixieren, was zu einer Relativbewegung zwischen dem Abstützelement und dem Reibring führt. Zur weiteren Bauteiloptimierung schließt die Erfindung ein Abstützelement ein, welches gleichzeitig die Funktion des Reibrings übernimmt und mit der Innenwandung des Maschinenteils zusammenwirkt. Dazu weist das Abstützelement im Bereich der Kontaktfläche mit den Maschinenteil bevorzugt eine verschleißfeste Beschichtung auf.

Eine Stellbewegung des Spannhebels zum Spannen des Zugmittels bewirkt ein radiales Aufweiten der Torsionsfeder, verbunden mit einer erhöhten Abstützkraft des Reibrings an der Innenwandung des Maschinenteils, wodurch beispielsweise hochfrequente Stellbewegungen des Spannhebels gedämpft werden. Als Maßnahme, um ein ungehindertes radiales Aufweiten des Abstützelementes sowie des Reibrings in dem Bauraum zwischen der Innenwandung des Maschinenteils und der Torsionsfeder zu ermöglichen, bietet es sich an, das der Reibring und/oder das Abstützelement eine Trennfuge oder von beiden Seiten zueinander versetzte Einschnitte aufweisen. Im Bereich der Kontaktflächen der Bauteile, die eine Relativbewegung ausführen ist erfindungsgemäß vorgesehen, dass zumindest ein Bauteil eine Profilierung aufweist, die bevorzugt längs oder schräg verlaufende Riefen oder Nuten einschließt, die dazu vorgesehen sind, dass sich im Betriebszustand ein durch Verschleiß einstellender Abrieb selbsttätig aus der Kontaktzone entfernt.

Zur Anpassung der Bohrung oder Aufnahme in dem Maschinenteil an den erfindungsgemäßen Aufbau des Spannsystems, ist eine Stufenbohrung in das Maschinenteile eingebracht. Die Abmessung der Stufe entspricht dabei der Längserstreckung der Reibvorrichtung. Vorteilhaft ergibt sich dadurch ein an die Bauform des Basisteils einschließlich der Torsionsfeder und der Reibvorrichtung abgestimmtes Bohrungsprofil innerhalb des Maschinenteils.

Ein weitere erfindungsgemäße Ausgestaltung sieht vor, dass sich an den gestufte Abschnitt der Bohrung in den Maschinenteilen stirnseitig einen axial vorstehender geschlossen ringförmiger Ansatz bildet, der im Einbauzustand in eine stirnseitige Aussparung des Spannhebels spielbehaftet eingreift. Alternativ dazu bietet es sich an, dass der Ansatz von einem umlaufenden Bord des Spannhebels beabstandet umgriffen wird. Dieser Aufbau bildet ein Dichtungslabyrinth, wodurch wirksam einen eintritt von Verunreinigungen jeglicher Art unterbunden wird, was sich vorteilhaft insbesondere auf die Wirkungsweise der Reibvorrichtung auswirkt.

Als Maßnahme zur Erzielung einer steifen, gewichtsoptimierten Bauweise des Basisteils ist dieses als ein Hohlkörper gestaltet, welches axial versetzt zu einer Grundplatte einen radial nach innen gestuften einen Lagerbolzen bildenden Abschnitt aufweist, der gemeinsam mit der Nabe des Spannhebels und einer Gleitlagerbuchse das Schwenklager bildet. Der sich in die Grundplatte anschließende zylindrische Abschnitt des Basisteils kann dabei als Führung für die Torsionsfeder genutzt werden, welche das Basisteil umgreift. Die Grundplatte ist spielbehaftet in die Öffnung bzw. Bohrung des Maschinenteils eingesetzt und bildet damit eine großflächige Abstützung für das Basisteil. Die Grundplatte weist weiterhin einen axial vorstehenden Ansatz oder Nocken auf, der zur Bildung einer drehfixierten Einbaulage des Basisteils formschlüssig in eine entsprechende Aussparung des Maschinenteils eingreift.

Eine weitere bevorzugte Gestaltung des Basisteils sieht vor, dass an dem freien Ende des Lagerbolzens eine Anlaufscheibe fixiert ist. Diese bildet einen Axialanschlag für den Spannhebel, der aufgrund der Axialkraft der Torsionsfeder mittelbar über einen rechtwinklig ausgerichteten, einstückig mit der Lagerbuchse verbundenen Bord an der Anlaufscheibe abgestützt ist.

Alternativ zu einer Befestigung des Spannsystems an dem Maschinenteil, bei dem eine Verschraubung durch das Basisteil geführt ist, bietet es sich an, dem Basisteil eine Schildplatte zuzuordnen. Zur Befestigung des Basisteils ist der Lagerbolzen stirnseitig mit einer Schildplatte verbunden, die über radial zu einer Schwenkachse des Spannhebels versetzte Befestigungsmittel an dem Maschinenteil oder dem Nebenaggregateträger fixiert ist. Diese Spannsystem-Befestigung kann beispielsweise für eine Einbausituation eingesetzt werden, bei der die Bauteilstärke des Maschinenteils nicht ausreicht um eine ausreichende Gewindelänge für die Befestigungsschraube zu generieren.

Zur Vereinfachung der Montage bei der Spannhebel eine Werkzeugaufnahme auf, mit dem nach einer Befestigung des Spannsystems an dem Maschinenteilen mittels einer Befestigungsschraube der Spannsystem in eine das Zugmittel vorspannende Position schwenkbar ist. Vorteilhaft eignet sich dazu ein in den Schwenkhebel eingebrachtes Mehrkantprofil, in das mittels eines separaten Werkzeugs der Schwenkhebel verstellbar ist.

Die kompakte Bauweise, insbesondere des Basisteils und der Torsionsfeder unterstreichend, ist für die Bohrungstiefe und dem Bohrungsdurchmesser der Bohrung beziehungsweise Stufenbohrung in dem Maschinenteil ein bevorzugtes Maßverhältnis von ≥ 1 : 1 vorgesehen.

Zur Erzielung gewichtsoptimierter Bauteile des Spannsystems bietet es sich an, das Basisteil sowie den Schwenkarm als Gussteile zu gestalten, wobei als Werkstoff bevorzugt Aluminium oder eine Aluminiumlegierung vorgesehen ist.

### Kurze Beschreibung der Zeichnungen

Ausführungsbeispiele von erfindungsgemäßen Spannsystemen sind in den Zeichnungen dargestellt, die nachfolgend näher beschrieben werden. Es zeigen:
- Fig. 1: ein erfindungsgemäßes Spannsystem, das mittels einer zentrisch durch das Basisteil geführten Schraube an einem Maschinenteil befestigt ist;
- Fig. 2: ein erfindungsgemäßes Spannsystem, das über eine Schildplatte an dem Maschinenteil befestigt ist.

### Detaillierte Beschreibung der Zeichnungen

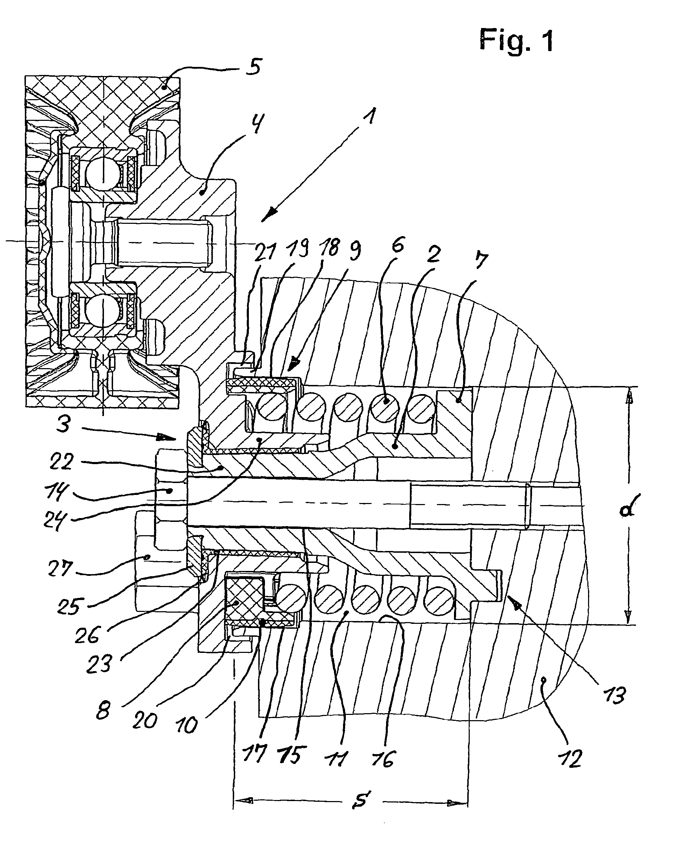

Die Figur 1 zeigt ein Spannsystem 1, umfassend ein Basiselement 2, dass über ein Schwenklager 3 mit einem Spannhebel 4 in einer Wirkverbindung steht, der an seinem freien Ende eine drehbare Spannrolle 5 einschließt. Im Betriebszustands des Spannsystems 1 ist die Spannrolle 5 kraftschlüssig zur Erzielung einer ausreichenden Vorspannung an einem in Figur 1 nicht abgebildeten Zugmittel, insbesondere einem Riemen abgestützt. Dazu wird der Spannhebel 4 von einem Torsionsmoment beaufschlagt, welches von einem zwischen dem Basiselement 2 und dem Spannhebel 4 eingesetzten Federelement 6 ausgelöst wird. Als Federelement 6 dient eine als Schraubenfeder ausgeführte Torsionsfeder die mit einem ersten Federende an einer Grundplatte 7 des Basiselementes 2 und mit einem zweiten Federende über ein Abstützelement 8 mittelbar an dem Spannhebel 4 jeweils drehfixiert abgestützt ist. Zur Dämpfung beispielsweise von hochfrequenten Stellbewegungen des Spannhebels 4 ist eine auch als Dämpfungsvorrichtung zu bezeichnende Reibvorrichtung 9 vorgesehen, die einen Reibring 10 bzw. eine Gleitlagerbuchse umfasst, die das Abstützelement 8 umschließt. Das Basiselement 2 ist in einer auch als Aufnahmeprofil oder zylindrische Bohrung bezeichneten Aufnahme 11 eines Maschinenteils 12 über eine Verdrehsicherung 13 lagefixiert eingesetzt. Als Maschinenteil 12 ist bevorzugt ein Nebenaggregateträger, Aggregateträger oder Gehäuse einer Brennkraftmaschine vorgesehen. Eine Befestigung des Basiselementes 2 und damit des gesamten Spannsystems 1 erfolgt über eine Sechskantschraube 14, die durch eine zentrale Längsbohrung 15 des Basiselementes 2 geführt und in ein Gewinde des Maschinenteils 12 eingeschraubt ist. Bei einer das Zugmittel vorspannenden Stellbewegung des Spannhebels 4 wird das Federmittel 6 radial aufgeweitet, wodurch sich der Reibring 10 kraftschlüssig an einer Innenwandung 16 des Maschinenteils 12 abstützt. Zur Anpassung an die Reibvorrichtung 9, insbesondere den Reibring 10, ist die Innenwandung 16 als Stufenbohrung 17 ausgeführt, wobei ein radial nach außen gerichteter Abschnitt 18 in Verbindung mit einem Ansatz 19 des Maschinenteils 12 gegenüber einer Stirnseite des Maschinenteil 12 axial übersteht. der Ansatz 19 greift spielbehaftet in eine stirnseitige Ausnehmung 20 des Spannhebels 4, zur Bildung eines Dichtlabyrinths 21. Das Schwenklager 3, über das der Spannhebel 4 auf dem Basiselement 2 schwenkbar gelagert ist, umfasst ein dem Basiselement 2 zugeordneten Lagerbolzen 22, ein Gleitlager 23 sowie eine Nabe 24 des Spannhebels 4. Eine endseitig an dem Lagerbolzen 22 fixierte Anlaufscheibe 25 bildet einen Axialanschlag für die Nabe 24 des Spannhebels 4, der mittelbar über einen einstückig mit der Gleitlagerbuchse 10 verbundenen Bord 26 reibungsmindernd der Anlaufscheibe 25 abgestützt ist. Als Hilfsmittel über das der Spannhebel 4 nach erfolgter Montage des Spannsystems an dem Maschinenteil 12 in eine Spannlage verschwenkbar ist, um beispielsweise das Zugmittel zu montieren oder um einen Austausch des Zugmittels zu ermöglichen weist der Spannhebel 4 eine für einen separates Werkzeug bestimmte Werkzeugaufnahme 27 auf. Für die Auslegung der bauraumoptimierten Bauteile des Spannsystems 1 innerhalb des Maschinenteils 12 ist Maßverhältnis zwischen der Bohrungstiefe "s" und einem Bohrungsdurchmesser "d" der Aufnahme 11 ≥ 1 : 1 vorgesehen.

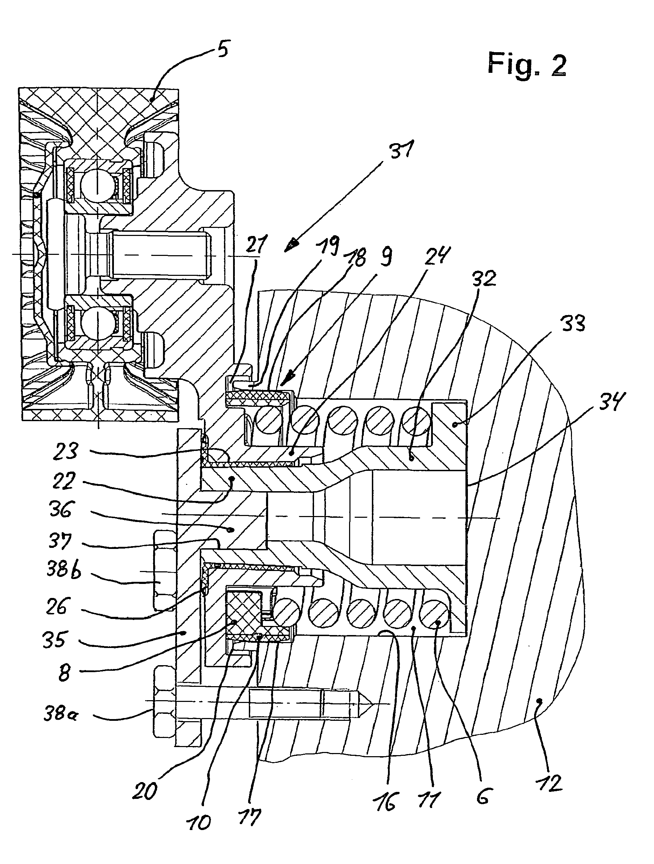

Das weitere Ausführungsbeispiel gemäß Figur 2 unterscheidet sich von dem Ausführungsbeispiel gemäß Figur 1 durch eine änderte Befestigung des Basiselementes. Alle übereinstimmenden Bauteile zwischen den Ausführungsbeispielen sind mit gleichen Bezugsziffern versehen. Die nachfolgende Beschreibung beschränkt sich auf den unterschiedlichen Aufbau.

Das Spannsystem 31 gemäß Figur 2 umfassend ein Basiselement 32, dass ohne eine für Drehsicherung über die Grundplatte 33 an einem Boden 34 des Maschinenteils 12 abgestützt ist. Zur Befestigung des Spannsystems 31 ist eine Schildplatte 35 vorgesehen, die mit einem Mehrkantprofil 36 formschlüssig in eine korrespondierende Aufnahme 37 des Basiselementes 32 im Bereich des Lagerbolzen 22 eingreift. Über zumindest zwei radial versetzt zu einer Schwenkachse 39 angeordnete Befestigungsmittel 38a, 38b, insbesondere Sechskantschrauben, wird die Schildplatte 35 an dem Maschinenteilen befestigt, wodurch gleichzeitig eine wirksame Drehfixierung des Basiselementes 32 sichergestellt ist.

### Bezugszahlenliste

- 1: Spannsystem
- 2: Basiselement
- 3: Schwenklager
- 4: Spannhebel
- 5: Spannrolle
- 6: Federelement
- 7: Grundplatte
- 8: Abstützelement
- 9: Reibvorrichtung
- 10: Reibring
- 11: Aufnahme
- 12: Maschinenteil
- 13: Drehsicherung
- 14: Sechskantschraube
- 15: Längsbohrung
- 16: Innenwandung
- 17: Stufenbohrung
- 18: Abschnitt
- 19: Ansatz
- 20: Ausnehmung
- 21: Dichtlabyrinth
- 22: Lagerbolzen
- 23: Gleitlager
- 24: Nabe
- 25: Anlaufscheibe
- 26: Wort
- 27: Werkzeugaufnahme
- 31: Spannsystem
- 32: Basiselement
- 33: Grundplatte
- 34: Boden
- 35: Schildplatte
- 36: Mehrkantprofil
- 37: Aufnahme
- 38a: Befestigungsmittel
- 38b: Befestigungsmittel
- 39: Schwenkachse

## Patentansprüche

1. Spannsystem eines Zugmitteltriebs, umfassend:
- einen Spannhebel (4), der über ein Schwenklager (3) drehbar zu einem ortsfest positionierten Basiselement (2, 32) angeordnet ist;
- ein Schwenklager (3), bei dem eine Nabe (24) des Spannhebels (4) über ein Gleitlager (23) auf einem Lagerbolzen (22) des Basiselements (2, 32) angeordnet ist;
- eine endseitig des Spannhebels (4) positionierte, mit einem Zugmittel zusammenwirkende Spannrolle (5);
- ein Federelement (6), dass mit einem Federende an dem Basiselement (2, 32) und einem weiteren Federende an dem Spannhebel (4) drehfixiert abgestützt ist, wobei das Federelement (6) ein Torsionsmoment in eine Spannrichtung des Spannhebels (4) einleitet;
- eine die Stellbewegung des Spannhebels dämpfende Reibvorrichtung (9) ;
**dadurch gekennzeichnet, dass** zumindest das Basiselement (2, 32), bereichsweise das Schwenklager (3) und das Federelement (6) nahezu vollständig in einer zylindrischen Aufnahme (11), Öffnung oder Aufnahmeprofil eines dem Spannsystem (1, 31) zugeordneten separaten Maschinenteils (12) positioniert sind und die Reibvorrichtung (9) im Betriebszustand mit einem separaten Bauteil des Spannsystem (1, 31), insbesondere dem Maschinenteil (12) zusammenwirkt.

2. Spannsystem nach Anspruch 1, **dadurch gekennzeichnet, dass** als Maschinenteil (12) ein Nebenaggregateträger oder Aggregateträger einer Brennkraftmaschine vorgesehen ist, der eine Aufnahme (11), Öffnung oder Aufnahmeprofil für das Spannsystem (1, 31) einschließt.

3. Spannsystem nach Anspruch 1, **dadurch gekennzeichnet, dass** als Maschinenteil ein Gehäuse einer Brennkraftmaschine vorgesehen ist, das eine Aufnahme (11), Öffnung oder Aufnahmeprofil für das Spannsystem (1, 31) einschließt.

4. Spannsystem nach Anspruch 1, **dadurch gekennzeichnet, dass** als Federelement (6) eine als Schraubenfeder ausgebildete Torsionsfeder eingesetzt ist, die sich zum Spannen des Zugmittels radial aufweitet.

5. Spannsystem nach zumindest einem der Ansprüche 1 bis 4, **dadurch gekennzeichnet, dass** die Reibvorrichtung (9) ein mit einem Federende der als Torsionsfeder ausgebildeten Federelemente (6) zusammenwirkendes, an dem Schwenkhebel (4) drehfixiertes Abstützelement (8) aufweist, dass außenseitig von einer Gleitlagerbuchse oder einem Reibring (10) umschlossen ist, der im Betriebszustand kraftschlüssig an einer Innenwandung (16) der Aufnahme (11) des Maschinenteils abgestützt ist.

6. Spannsystem nach Anspruch 5, **dadurch gekennzeichnet, dass** der Reibring (10) und/oder das Abstützelement (8) zumindest eine Trennfuge beziehungsweise von beiden Seiten zueinander versetzte Einschnitte oder im Bereich einer Kontaktfläche längsseitige Riefen bzw. Nuten aufweist.

7. Spannsystem nach Anspruch 5, **dadurch gekennzeichnet, dass** der Reibring (10) einem radial nach außen gestuften Abschnitt (18) einer als Stufenbohrung (17) gestalteten Innenwandung (16) des Maschinenteils zugeordnet ist.

8. Spannsystem nach zumindest einem der Ansprüche 1 bis 7, **dadurch gekennzeichnet, dass** die gestufte Innenwandung (16) stirnseitig an dem Maschinenteil (12) einen zylindrischen axial vorstehenden Ansatz (19) bildet, der von einem Bord einer Ausnehmung (20) des Spannhebels (4) zur Bildung eines Dichtungslabyrinths (21) beabstandet umgriffen wird.

9. Spannsystem nach zumindest einem der Ansprüche 1 bis 8, **dadurch gekennzeichnet, dass** in der zylindrischen Aufnahme (11) des Maschinenteils (12) das Basisteil (2) über eine Grundplatte (7) an einem Boden abgestützt und über eine Verdrehsicherungsnase (13) lagefixiert ist.

10. Spannsystem nach zumindest einem der Ansprüche 1 bis 9, **dadurch gekennzeichnet, dass** das als ein Hohlkörper gestaltete Basisteil (2) zentrisch eine Bohrung für eine Sechskantschraube (14) aufweist und axial versetzt zu der Grundplatte (7)einen radial gestuften, als Lagerbolzen (22) gestalteten Abschnitt bildet, der gemeinsam mit der Nabe (24) des Spannhebels (4) und einer Gleitlager (23) das Schwenklager (3) bildet.

11. Spannsystem nach Anspruch 10, **dadurch gekennzeichnet, dass** an dem Lagerbolzen (22) des Basisteils (2) endseitig eine Anlaufscheibe (21) fixiert ist, an der über einen Bord (26) des Gleitlagers (23) der Spannhebel (4) axial abgestützt ist.

12. Spannsystem nach zumindest einem der Ansprüche 1 bis 11, **dadurch gekennzeichnet, dass** zur Befestigung des Basisteils (32) des Spannsystems (31) der Lagerbolzen (22) stirnseitig formschlüssig mit einer Schildplatte (35) verbunden ist, die über radial zu einer Schwenkachse (39) des Spannhebels (4) versetzte Befestigungsmittel (38a, 38b) an dem Maschinenteil (12) fixiert ist.

13. Spannsystem nach zumindest einem der Ansprüche 1 bis 13, **dadurch gekennzeichnet, dass** der Spannhebel (4) eine Werkzeugaufnahme (27) aufweist, mit der der Spannhebel (4) und damit das Spannsystem (1) in Verbindung mit einem separaten Werkzeug einstellbar ist.

14. Spannsystem nach zumindest einem der Ansprüche 1 bis 13, **dadurch gekennzeichnet, dass** zur Auslegung der Aufnahme (11) in dem Maschinenteil (12) eine Bohrungstiefe "s" zu einem Bohrungsdurchmesser "d" der Stufenbohrung in einem Verhältnis von ≤ 1:1 ausgelegt ist.

15. Spannsystem nach zumindest einem der Ansprüche 1 bis 14, **dadurch gekennzeichnet, dass** der Spannhebel (4) und das Basisteil (2, 32) als ein Gussteil gestaltet sind, wobei als Gusswerkstoff bevorzugt Aluminium oder eine Aluminiumlegierung vorgesehen ist.

## Claims

1. Tensioning system of a traction mechanism drive, comprising:
- a tensioning lever (4) which is arranged such that it can be rotated via a pivoting bearing (3) with respect to a base element (2, 32) which is positioned in a stationary manner;
- a pivoting bearing (3), in which a hub (24) of the tensioning lever (4) is arranged via a sliding bearing (23) on a bearing pin (22) of the base element (2, 32);
- a tensioning roller (5) which is positioned on the end side of the tensioning lever (4) and interacts with a traction mechanism;
- a spring element (6) which is supported with one spring end on the base element (2, 32) and with a further spring end on the tensioning lever (4) in a rotationally fixed manner, the spring element (6) introducing a torsional moment in a tensioning direction of the tensioning lever (4);
- a frictional device (9) which damps the actuating movement of the tensioning lever;
**characterized in that** at least the base element (2, 32), in regions the pivoting bearing (3) and the spring element (6) are positioned virtually completely in a cylindrical receptacle (11), opening or receiving profile of a separate machine part (12) which is assigned to the tensioning system (1, 31) and, in the operating state, the frictional device (9) interacts with a separate component of the tensioning system (1, 31), in particular the machine part (12).

2. Tensioning system according to Claim 1, **characterized in that** an ancillary-assembly carrier or assembly carrier of an internal combustion engine is provided as machine part (12), which encloses a receptacle (11), opening or receiving profile for the tensioning system (1, 31).

3. Tensioning system according to Claim 1, **characterized in that** a housing of an internal combustion engine is provided as machine part, which housing encloses a receptacle (11), opening or receiving profile for the tensioning system (1, 31).

4. Tensioning system according to Claim 1, **characterized in that** a torsion spring which is configured as a helical spring and widens radially in order to tension the traction mechanism is used as spring element (6).

5. Tensioning system according to at least one of Claims 1 to 4, **characterized in that** the frictional device (9) has a supporting element (8) which is fixed rotationally on the pivoting lever (4), interacts with one spring end of the spring elements (6) which are configured as torsion springs, and is enclosed on the outer side by a sliding bearing bush or a friction ring (10) and, in the operating state, is supported non-positively on an inner wall (16) of the receptacle (11) of the machine part.

6. Tensioning system according to Claim 5, **characterized in that** the friction ring (10) and/or the supporting element (8) have/has at least one joint or notches which are offset with respect to one another from both sides or longitudinal flutes or grooves in the region of a contact face.

7. Tensioning system according to Claim 5, **characterized in that** the friction ring (10) is assigned to a radially outwardly stepped section (18) of an inner wall (16) of the machine part, which inner wall (16) is designed as a stepped bore (17).

8. Tensioning system according to at least one of Claims 1 to 7, **characterized in that** the stepped inner wall (16) forms a cylindrical axially projecting extension (19) on the end side of the machine part (12), which extension (19) is reached around in a spaced apart manner by a rim of a recess (20) of the tensioning lever (4) in order to form a sealing labyrinth (21).

9. Tensioning system according to at least one of Claims 1 to 8, **characterized in that** the base part (2) is supported via a base plate (7) on a bottom in the cylindrical receptacle (11) of the machine part (12) and is positionally fixed via an anti-rotation safeguard lug (13).

10. Tensioning system according to at least one of Claims 1 to 9, **characterized in that** the base part (2) which is designed as a hollow body has a hole for a hexagon bolt (14) centrally and, axially offset with respect to the base plate (7), forms a radially stepped section which is designed as a bearing pin (22) and forms the pivoting bearing (3) together with the hub (24) of the tensioning lever (4) and a sliding bearing (23).

11. Tensioning system according to Claim 10, **characterized in that** a stop disc (21) is fixed on the end side of the bearing pin (22) of the base part (2), on which the tensioning lever (4) is supported axially via a rim (26) of the sliding bearing (23).

12. Tensioning system according to at least one of Claims 1 to 11, **characterized in that**, in order to fasten the base part (32) of the tensioning system (31), the bearing pin (22) is connected positively on the end side to a shield plate (35) which is fixed on the machine part (12) via fastening means (38a, 38b) which are offset radially with respect to a pivot axis (39) of the tensioning lever (4).

13. Tensioning system according to at least one of Claims 1 to 12, **characterized in that** the tensioning lever (4) has a tool receptacle (27), by way of which the tensioning lever (4) and therefore the tensioning system (1) can be set in conjunction with a separate tool.

14. Tensioning system according to at least one of Claims 1 to 13, **characterized in that**, in order to configure the receptacle (11) in the machine part (12), a bore depth "s" is configured with respect to a bore diameter "d" of the stepped bore in a ratio of ≤ 1:1.

15. Tensioning system according to at least one of Claims 1 to 14, **characterized in that** the tensioning lever (4) and the base part (2, 32) are designed as a cast part, aluminium or an aluminium alloy preferably being provided as casting material.

## Revendications

1. Système de tension pour un mécanisme de traction, comprenant:
- un levier de tension (4), qui est agencé de façon rotative par rapport à un élément de base positionné de façon immobile (2, 32) au moyen d'un palier pivotant (3);
- un palier pivotant (3), dans lequel un moyeu (24) du levier de tension (4) est agencé sur une douille de palier (22) de l'élément de base (2, 32) au moyen d'un palier lisse (23);
- un galet de tension (5) positionné à l'extrémité du levier de tension (4) et coopérant avec un mécanisme de traction;
- un élément de ressort (6), qui est maintenu de façon fixe en rotation par une extrémité de ressort sur l'élément de base (2, 32) et par une autre extrémité de ressort sur le levier de tension (4), l'élément de ressort (6) introduisant un couple de torsion dans une direction de tension du levier de tension (4);
- un dispositif à friction (9) amortissant le mouvement de réglage du levier de tension;
**caractérisé en ce qu'**au moins l'élément de base (2, 32), localement le palier pivotant (3) et l'élément de ressort (6) sont positionnés presque complètement dans un logement cylindrique (11), une ouverture ou un profil de réception d'une partie de machine séparée (12) associée au système de tension (1, 31) et le dispositif à friction (9) coopère, dans l'état de fonctionnement, avec une pièce séparée du système de tension (1, 31), en particulier la partie de machine (12).

2. Système de tension selon la revendication 1, **caractérisé en ce qu'**il est prévu comme partie de machine (12) un support de groupe auxiliaire ou un support de groupe d'un moteur à combustion interne, qui comporte un logement (11), une ouverture ou un profil de réception pour le système de tension (1, 31).

3. Système de tension selon la revendication 1, **caractérisé en ce qu'**il est prévu comme partie de machine un corps d'un moteur à combustion interne, qui comporte un logement (11), une ouverture ou un profil de réception pour le système de tension (1, 31).

4. Système de tension selon la revendication 1, **caractérisé en ce que** l'on utilise comme élément de ressort (6) un ressort de torsion sous forme de ressort hélicoïdal, qui se dilate radialement pour tendre le mécanisme de traction.

5. Système de tension selon au moins une des revendications 1 à 4, **caractérisé en ce que** le dispositif à friction (9) comprend un élément d'appui (8) fixé en rotation sur le levier pivotant (4) et coopérant avec une extrémité de ressort de l'élément de ressort (6) en forme de ressort de torsion, qui est entouré côté extérieur par un coussinet de palier lisse ou une bague de friction (10), qui est appuyée, dans l'état de fonctionnement, par complémentarité de force sur une paroi intérieure (16) du logement (11) de la partie de machine.

6. Système de tension selon la revendication 5, **caractérisé en ce que** la bague de friction (10) et/ou l'élément d'appui (8) présente au moins un joint de séparation ou des entailles décalées l'une par rapport à partir des deux côtés ou des cannelures ou des rainures longitudinales dans la région d'une face de contact.

7. Système de tension selon la revendication 5, **caractérisé en ce que** la bague de friction (10) est associée à une section étagée radialement vers l'extérieur (18) d'une paroi intérieure (16) en forme d'alésage étagé (17) de la partie de machine.

8. Système de tension selon au moins une des revendications 1 à 7, **caractérisé en ce que** la paroi intérieure étagée (16) forme côté frontal sur la partie de machine (12) un rebord cylindrique axialement saillant (19), qui est entouré à distance par un bord d'un évidement (20) du levier de tension (4) pour la formation d'un joint à labyrinthe (21).

9. Système de tension selon au moins une des revendications 1 à 8, **caractérisé en ce que** la partie de base (2) est appuyée par une plaque de base (7) sur un fond dans le logement cylindrique (11) de la partie de machine (12) et est fixée en position par un ergot empêchant la rotation (13).

10. Système de tension selon au moins une des revendications 1 à 9, **caractérisé en ce que** la partie de base (2) réalisée en forme de corps creux présente en son centre un alésage pour une vis à six pans (14) et forme, en décalage axial par rapport à la plaque de base (7), une partie radialement étagée réalisée en forme de douille de palier (22), qui forme le palier pivotant (3) ensemble avec le moyeu (24) du levier de tension (4) et un palier lisse (23).

11. Système de tension selon la revendication 10, **caractérisé en ce qu'**un disque de butée (21) est fixé côté extrémité à la douille de palier (22) de la partie de base (2), sur lequel le levier de tension (4) est appuyé axialement par un bord (26) du palier lisse (23).

12. Système de tension selon au moins une des revendications 1 à 11, **caractérisé en ce que**, pour la fixation de la partie de base (32) du système de tension (31), la douille de palier (22) est reliée côté frontal en complémentarité de forme avec une plaque de bouclier (35), qui est fixée à la partie de machine (12) par des moyens de fixation (38a, 38b) décalés radialement par rapport à un axe de pivotement (39) du levier de tension (4).

13. Système de tension selon au moins une des revendications 1 à 12, **caractérisé en ce que** le levier de tension (4) présente un logement d'outil (27), avec lequel le levier de tension (4) et dès lors le système de tension (1) est ajustable en liaison avec un outil séparé.

14. Système de tension selon au moins une des revendications 1 à 13, **caractérisé en ce que**, pour la conception du logement (11) dans la partie de machine (12), on utilise une profondeur d'alésage "s" et un diamètre d'alésage "d" de l'alésage étagé présentant un rapport ≤ 1:1.

15. Système de tension selon au moins une des revendications 1 à 14, **caractérisé en ce que** le levier de tension (4) et la partie de base (2, 32) sont réalisés sous la forme d'une pièce coulée, dans lequel il est de préférence prévu de l'aluminium ou un alliage d'aluminium comme matériau de coulée.
